# FASCICULE DE BREVET EUROPEEN

(11) **EP 3 004 824 B1**
(45) Date de publication et mention de la délivrance du brevet: **03.05.2017**
(21) Numéro de dépôt: 14733247.2
(22) Date de dépôt: 03.06.2014
(51) Int. Cl.: G01K 7/16

(54) **CAPTEUR DE TEMPERATURE A PATE THERMOSENSIBLE**
TEMPERATURSENSOR MIT EINER WÄRMEEMPFINDLICHEN PASTE
TEMPERATURE SENSOR WITH HEAT-SENSITIVE PASTE

(30) Priorité: 04.06.2013 FR 1355083; 04.06.2013 FR 1355084
(43) Date de publication de la demande: 13.04.2016
(73) Titulaire: Commissariat à l'Énergie Atomique et aux Énergies Alternatives, 75015 Paris (FR)
(72) Inventeur: ALIANE, Abdelkader, 38100 Grenoble (FR); COPPARD, Romain, 38500 Voiron (FR)
(74) Mandataire: Thibon, Laurent
(86) Numéro de dépôt international: PCT/FR2014/051319
(87) Numéro de publication internationale: WO 2014/195631

(56) Documents cités:
- EP-A1- 0 125 366
- EP-A1- 1 492 131
- EP-A1- 2 506 269
- WO-A1-2012/035938
- FR-A- 1 571 105
- FR-A1- 2 851 404
- JP-A- 2012 002 692
- US-B2- 6 951 419

## Description

La présente demande de brevet revendique la priorité des demandes de brevet français FR13/55083 et FR13/55084 qui seront considérées comme faisant partie intégrante de la présente description.

### Domaine

La présente demande concerne le domaine de la détection de la température et de l'imagerie thermique avec des éléments de détection de température constitués de pâtes résistives.

### Exposé de l'art antérieur

On connaît des capteurs adaptés à la détection de la température et l'imagerie thermique constitués de pâtes résistives imprimées sur un substrat plastique, éventuellement flexible à faible coût. Ces capteurs sont par exemple utilisés pour mesurer la température d'un objet ou pour mesurer un gradient thermique pour l'imagerie thermique avec un maximum de sensibilité et de précision.

Les pâtes résistives à coefficient de température négatif, couramment désignées par le sigle NTC (de l'anglais Negative Temperature Coefficient), sont par exemple à base d'un oxyde métallique tel que de l'oxyde d'étain dopé à l'antimoine de formule chimique Sb₂O₅SnO₂ ou ATO. Les pâtes résistives thermosensibles à coefficient de température positif, couramment désignées par le sigle PTC (de l'anglais Positive Temperature Coefficient), sont couramment à base de noir de carbone. Dans une résistance PTC, la valeur de la résistance électrique augmente quand la température augmente. Dans une résistance NTC, la valeur de la résistance électrique diminue quand la température augmente.

En outre, plutôt que d'utiliser une résistance thermosensible seule, il est connu pour augmenter la précision de mesure de monter des résistances NTC et PTC en pont de Wheatstone. Des exemples peuvent être retrouvés dans EP1492131 et FR1571105.

### Résumé

Un objet de la présente demande est d'améliorer la sensibilité des résistances thermosensibles à pâte résistive.

Un autre objet de la présente demande, plus particulièrement adapté au montage en pont de Wheatstone, est d'augmenter la valeur des résistances thermosensibles à pâtes résistives.

Ainsi, un mode de réalisation prévoit une résistance thermosensible à coefficient de température négatif ou positif, comprenant respectivement un élément résistif à base d'oxyde d'étain dopé à l'antimoine ou un élément résistif à base de noir de carbone, contenant un polymère de constante diélectrique comprise entre 2 et 3, de masse molaire comprise entre 50000 et 150000 g/mol, et de température de transition vitreuse Tg comprise entre 40 et 100°C.

Selon un mode de réalisation, le polymère appartient à la famille des polymères styréniques ou à la famille des polymères fluorés.

Selon un mode de réalisation, l'élément résistif comprend de 5 % à 40 % en poids d'extrait sec du polymère par rapport au poids total de l'élément résistif.

Un mode de réalisation prévoit également une résistance thermosensible à coefficient de température positif à seuil de température ajustable dont la résistance est constante au-dessous dudit seuil et croît avec la température au-dessus dudit seuil, comprenant, en série, une première piste résistive constituée d'une pâte thermosensible à coefficient de température positif, PTC, et une deuxième piste résistive constituée d'une pâte thermosensible à coefficient de température négatif, NTC.

Un mode de réalisation prévoit également un procédé de fabrication d'une résistance thermosensible à coefficient de température négatif ou positif, comprenant les étapes suivantes :
réaliser une première solution comprenant de l'oxyde d'étain dopé à l'antimoine ou du noir de carbone contenant un polymère de constante diélectrique comprise entre 2 et 3, de masse molaire comprise entre 50000 et 150000 g/mol, et de température de transition vitreuse Tg comprise entre 40 et 100°C ;
former des portions de la première solution sur un support ; et
chauffer les portions.

Selon un mode de réalisation, l'étape de fabrication de la première solution comprend les étapes suivantes :
prévoir une deuxième solution comprenant de l'oxyde d'étain dopé à l'antimoine ou du noir de carbone et un premier solvant ;
prévoir une troisième solution comprenant le polymère et un deuxième solvant ; et
mélanger les deuxième et troisième solutions.

Selon un mode de réalisation, la troisième solution est dans une proportion en poids inférieure à 30 %, de préférence de 10 à 30 % par rapport au poids total de la première solution.

Selon un mode de réalisation, la troisième solution comprend de 15 à 30 % en poids, par exemple 25 %, du polymère dans 85 à 70 % en poids, par exemple 75 %, du deuxième solvant.

Selon un mode de réalisation, le premier solvant est choisi dans le groupe comprenant le cyclopentanone, l'acétate d'éthyle, le tétrahydrofurane, l'acétone, la 3-hexanone et la 2-pentanone pour l'oxyde d'étain dopé à l'antimoine ou le groupe comprenant le cyclopentanone, le dibutyl carbitol, et l'éthylène glycol diacétate pour le noir de carbone.

Selon un mode de réalisation, le deuxième solvant a une température d'évaporation comprise entre 100 et 170°C.

Selon un mode de réalisation, le polymère appartient à la famille des polymères styréniques ou à la famille des polymères fluorés.

Selon un mode de réalisation, le deuxième solvant est choisi dans le groupe comprenant le toluène ou le butyl acétate pour les polymères styréniques ou le perfluorotributylamine (FC43) pour les polymères fluorés.

Selon un mode de réalisation, la température d'évaporation du premier solvant est strictement supérieure à la température d'évaporation du deuxième solvant.

Un mode de réalisation prévoit également un procédé de fabrication d'une résistance thermosensible à coefficient de température positif à seuil de température ajustable dont la résistance est constante au-dessous dudit seuil et croît avec la température au-dessus dudit seuil, comprenant les étapes suivantes :
former en série sur le support une première portion constituée d'une pâte thermosensible à coefficient de température positif, PTC, et une deuxième portion constituée d'une pâte thermosensible à coefficient de température négatif, NTC, la première et/ou la deuxième portion étant formée avec la première solution ; et
chauffer les première et deuxième portions pour former des première et deuxième pistes résistives.

### Brève description des dessins

Ces caractéristiques et avantages, ainsi que d'autres, sont exposés en détail dans la description suivante de modes de réalisation particuliers faite à titre non limitatif en relation avec les figures jointes parmi lesquelles :
les figures 1A à 1D représentent les structures obtenues à des étapes d'un mode de réalisation d'un procédé de fabrication de résistances NTC et PTC ;
la figure 2 représente des courbes d'évolution de la caractéristique de résistance en ohms/carré en fonction de la température pour plusieurs résistances NTC ;
la figure 3 représente des courbes d'évolution de la sensibilité en fonction de la température des résistances NTC de la figure 1 ;
la figure 4 représente une courbe d'évolution de la résistance en ohms/carré d'une résistance PTC en fonction de la température ;
la figure 5 représente des courbes d'évolution de la sensibilité en fonction de la température de résistances PTC ;
la figure 6 est une vue de dessus schématique d'un exemple de pont de Wheatstone comprenant des résistances NTC et PTC ;
la figure 7 représente des courbes d'évolution de la sensibilité en fonction de la température pour plusieurs ponts de Wheatstone ;
les figures 8A et 8B représentent schématiquement, en vue en coupe et en vue de dessus, une résistance à pâte résistive ;
la figure 9 représente une caractéristique de résistance en fonction de la température pour une résistance NTC ;
la figure 10 représente une caractéristique de résistance en fonction de la température pour une résistance PTC ;
les figures 11 et 12 sont des vues de dessus de modes de réalisation de résistances thermosensibles mixtes ;
la figure 13 représente des caractéristiques de résistance en fonction de la température pour une résistance NTC, une résistance PTC et une résistance mixte ;
les figures 14A à 14D représentent les structures obtenues à des étapes d'un mode de réalisation d'un procédé de fabrication de résistances NTC et PTC.

### Description détaillée

Par souci de clarté, de mêmes éléments ont été désignés par de mêmes références aux différentes figures et, de plus, les diverses figures ne sont pas tracées à l'échelle. Dans la suite de la description, sauf indication contraire, les termes "sensiblement", "environ" et "de l'ordre de" signifient "à 10 % près". En outre, seuls les éléments utiles à la compréhension de la présente description ont été représentés et sont décrits. En particulier, les traitements des signaux fournis par les capteurs de température sont bien connus de l'homme du métier et ne sont pas décrits davantage.

On note que, dans ce qui suit, les exemples sont donnés pour des capteurs formés d'encre thermosensible déposés sur des substrats flexibles de type PEN (naphtalate de polyéthylène) ou PET (téréphtalate de polyéthylène). Toutefois, la présente invention s'applique également au cas où le substrat est un substrat rigide, par exemple un substrat de verre.

Egalement, les exemples sont donnés dans le cas où l'on vise des températures de détection de 50 à 120°C.

De façon générale, on prévoit ici d'ajouter un polymère à une encre classique pour résistance NTC ou PTC, par exemple une encre à base de Sb₂O₅SnO₂ pour l'encre NTC et une encre à base de noir de carbone pour l'encre PTC. Le polymère a une constante diélectrique comprise entre 2 et 3, une masse molaire (caractérisant la longueur de chaine) comprise entre 50000 g/mol et 150000 g/mol, et une température de transition vitreuse Tg comprise entre 40°C et 100°C. Ce polymère peut appartenir à la famille des polymères styréniques ou à la famille des polymères fluorés. La constante diélectrique d'un matériau, également appelée permittivité relative, est égale au rapport de la permittivité du matériau par rapport à la permittivité du vide.

### Encre NTC :

La pâte résistive ou encre NTC comprend une solution d'encre ATO (Sb₂O₅SnO₂) et d'un polymère (P) tel que défini ci-dessus.

Le procédé de préparation de l'encre NTC est le suivant. On prépare une solution du polymère. Le polymère isolant peut être dissous dans un solvant ayant une température d'évaporation comprise entre 100 et 170°C, par exemple du toluène (température d'évaporation de 110°C), du butyl acétate (température d'évaporation de 118°C) pour les polymères styréniques ou du perfluorotributylamine (FC43, température d'évaporation de 165°C) pour les polymères fluorés, avec les pourcentages suivants par rapport au poids total de la solution de polymère : de 15 à 30 % en poids, par exemple 25 %, du polymère et de 85 à 70 % en poids, par exemple 75 %, du solvant.

On utilise, en outre, une solution d'encre ATO pouvant correspondre au produit commercialisé par la société DuPont sous l'appellation D7164.

La solution d'encre ATO peut comprendre l'un des solvants suivants : cyclopentanone, acétate d'éthlyle, tétrahydrofurane, 3-hexanone, 2-pentanone ou acétone. La solution d'encre ATO peut comprendre de 20 % à 80 % en poids d'ATO et de 20 % à 80 % en poids de solvant.

La solution de polymère obtenue est mélangée à la solution d'encre ATO (Sb₂O₅SnO₂) avec des proportions en poids inférieures à 30 %, de préférence de 10 à 30 % par rapport au poids total de la solution obtenue contenant le polymère et l'ATO. La solution obtenue comprenant le polymère et l'ATO est ensuite agitée pendant 10 à 30 minutes à température ambiante. Les proportions utilisées pour la fabrication du mélange sont adaptées en viscosité pour un dépôt par sérigraphie.

### Encre PTC

La pâte résistive ou encre PTC comprend une solution de noir de carbone et d'un polymère (P) tel que défini ci-dessus.

Le procédé de préparation de l'encre PTC est le suivant. On prépare une solution du polymère. Le polymère isolant peut être dissous dans un solvant ayant une température d'évaporation comprise entre 100 et 170°C, par exemple du toluène (température d'évaporation de 110°C), du butyl acétate (température d'évaporation de 118°C) pour les polymères styréniques ou du perfluorotributylamine (FC43, température d'évaporation de 165°C) pour les polymères fluorés, avec les pourcentages suivants par rapport au poids total de la solution de polymère : de 15 à 30 % en poids, par exemple 25 %, du polymère et de 85 à 70 % en poids, par exemple 75 %, du solvant.

On utilise, en outre, une solution de noir de carbone pouvant correspondre au produit commercialisé par la société DuPont sous l'appellation D7282. La solution de noir de carbone peut comprendre comme solvant le cyclopentanone, le dibutyl carbitol, ou l'éthylène glycol diacétate. La solution de noir de carbone peut comprendre de 40 % à 90 % en poids de noir de carbone et de 10 % à 60 % en poids de solvant.

La solution de polymère obtenue est mélangée avec la solution de noir de carbone avec des proportions en poids inférieures à 30 %, de préférence de 10 à 30 % par rapport au poids total de la solution obtenue contenant le polymère et le noir de carbone. La solution obtenue comprenant le polymère et le noir de carbone est ensuite agitée pendant 10 à 30 minutes à température ambiante. Les proportions utilisées pour la fabrication du mélange sont adaptées en viscosité pour un dépôt par sérigraphie.

Les inventeurs ont mis en évidence que, si on dépasse une proportion de 30 % en poids de la solution de polymère dans la solution contenant le polymère et l'ATO ou la solution contenant le polymère et le noir de carbone, les couches imprimées peuvent présenter des pores (des trous), ce qui peut dégrader très fortement le fonctionnement du capteur de température imprimé.

Les résistances thermosensibles utilisant les pâtes résistives modifiées par ajout d'un polymère telles que décrites ci-dessus, peuvent être fabriquées sur un substrat plastique flexible de type polyéthylène naphtalate (PEN) ou de type polyéthylène téréphtalate (PET), ou même sur du verre, par exemple selon un procédé comprenant principalement les étapes décrites ci-après.

Le procédé de fabrication comprend une étape de dépôt de portions de la solution de polymère et d'encre ATO et/ou de dépôt de portions de la solution de polymère et de noir de carbone. Cette étape de dépôt est suivie d'une étape de séchage pour faire évaporer tous les solvants de la solution de polymère et d'encre ATO et/ou de la solution de polymère et de noir de carbone.

Après séchage, l'encre NTC sèche obtenue comprend de 5 % à 40 %, de préférence de 10 % à 30 %, en poids d'extrait sec de polymère et de 60 % à 95 %, de préférence de 70 % à 90 %, en poids d'extrait sec d'ATO par rapport au poids total de l'encre NTC sèche.

Après séchage, l'encre PTC sèche obtenue comprend de 5 % à 40 %, de préférence de 10 % à 30 %, en poids d'extrait sec de polymère et de 60 % à 95 %, de préférence 70 % à 90 %, en poids d'extrait sec de noir de carbone par rapport au poids total de l'encre PTC sèche.

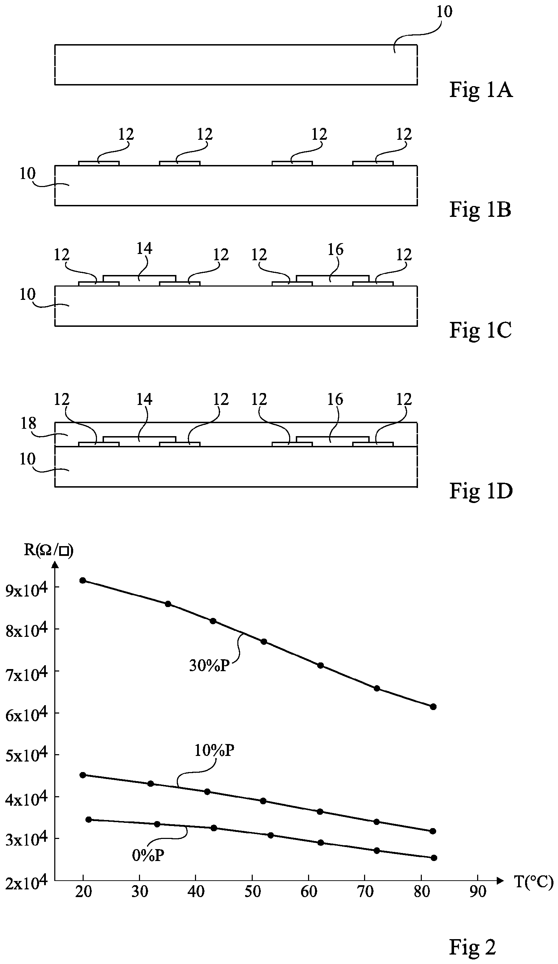

Les figures 1A à 1D représentent les structures obtenues à des étapes d'un mode de réalisation d'un procédé de fabrication de résistances NTC et PTC comprenant les étapes suivantes :
(1) On prépare un substrat 10 de PEN ou de PET (figure 1A). Les substrats PEN et PET sont cristallins et ont des températures de transition vitreuse respectives de 120 et 70°C. L'épaisseur du substrat 10 peut être de 50 à 200 µm, par exemple de 125 µm. Une faible épaisseur favorise la dynamique de transfert de la chaleur dans le capteur final.
(2) Des électrodes 12 formant les contacts électriques et les pistes électriques du capteur de température sont déposées et gravées (figure 1B). Ces électrodes 12 peuvent être en Au, Cu, Ag, Ti... et être déposées par dépôt physique en phase vapeur (PVD). Des électrodes en argent ou en cuivre (ou même en polymère conducteur comme du PEDOT : PSS : le poly(3,4-éthylènedioxythiophène) : poly(styrène sulfonate)) peuvent être déposées par sérigraphie ou par jet d'encre.
(3) L'étape (2) est suivie directement d'un traitement sous plasma d'oxygène avec un débit de 50 sccm et une puissance de 80 W pendant 60 secondes pour éliminer les résidus sur la surface et améliorer l'adhérence des pâtes résistives sensibles à la température. Un traitement UV/O₃ (ultraviolet/ozone) pendant 3 à 5 minutes du substrat est également souhaitable.
(4) Des portions 14, 16 de pâtes résistives sensibles à la température NTC et/ou PTC dopées en polymère sont déposées (figure 1C). Selon un mode de réalisation, il s'agit de portions d'une pâte résistive de même nature, NTC ou PTC. Selon un autre mode de réalisation, il s'agit de portions de pâtes résistives NTC et PTC. Dans ce cas, les portions de pâte résistive PTC sont formées après les portions de pâte résistive NTC ou, inversement, les portions de pâte résistive NTC sont formées après les portions de pâte résistive PTC. Les portions 14, 16 sont, par exemple, au contact de certaines pistes électriques 12. Chacun des dépôts peut être effectué par sérigraphie et être suivi d'un recuit à 130°C pendant 15 à 30 minutes (de préférence pendant 30 minutes). L'épaisseur des portions 14, 16 déposées peut être de 5 à 15 µm, par exemple 10 µm.
   De préférence, la température d'évaporation du solvant présent dans la solution d'encre ATO ou dans la solution de noir de carbone est strictement supérieure à la température d'évaporation du solvant présent dans la solution du polymère utilisée pour fabriquer les encres NTC et PTC. De ce fait, le solvant présent dans la solution du polymère s'évapore avant le solvant présent dans la solution d'encre ATO ou dans la solution de noir de carbone. La solution d'encre ATO ou de noir de carbone se répand alors dans les logements du réseau de polymère libérés par l'évaporation du solvant de la solution de polymère. On évite ainsi la formation d'une porosité trop importante des portions 14, 16 après évaporation de la totalité des solvants.
(5) Une couche de passivation 18 est déposée (figure 1D). La couche 18 peut être une couche de passivation hydrophobe à base d'un polymère fluoré à faible constante diélectrique, de l'ordre de 2. A titre d'exemple, ce dépôt est fait par sérigraphie ou par pulvérisation ou même par jet d'encre et est suivi d'un recuit à 100 ° C pendant 20 à 30 minutes. L'étape (5) peut ne pas être présente.

La figure 2 représente des courbes d'évolution de la caractéristique de résistance en ohms/carré (Ω/□) en fonction de la température pour une pâte résistive NTC à base d'ATO sans addition de polymère (0%P), pour une pâte résistive NTC à base d'ATO avec une addition de 10 % en poids de solution de polymère par rapport au poids total de la solution contenant le polymère et l'ATO (10%P), et pour une pâte résistive NTC à base d'ATO avec une addition de 30 % en poids de solution de polymère par rapport au poids total de la solution contenant le polymère et l'ATO (30%P). Les courbes de la figure 2 ont été obtenues pour une épaisseur de pâte résistive NTC de 5 µm.

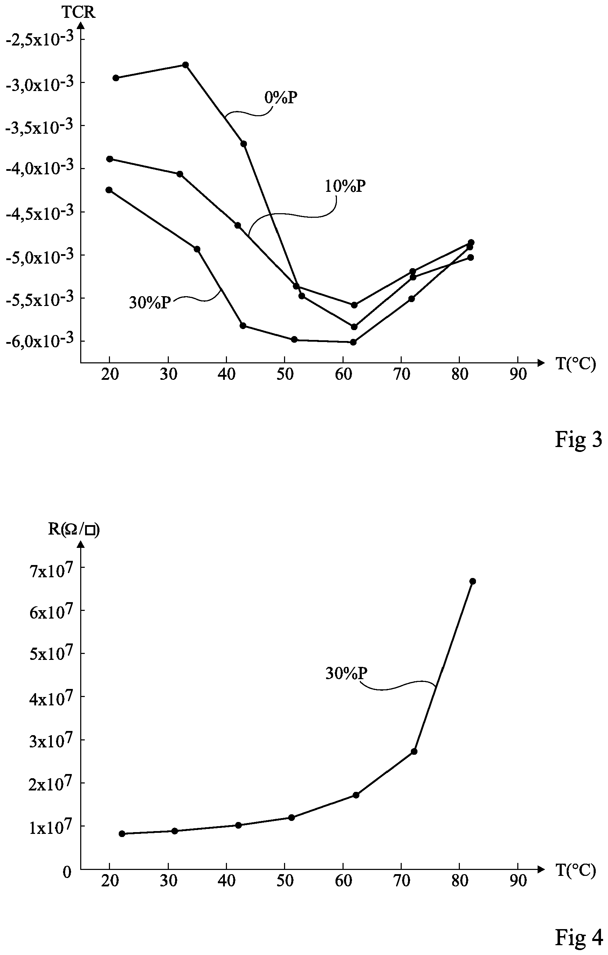

La figure 3 représente des courbes d'évolution du coefficient de variation de résistance avec la température (TCR) égal à (1/R)(dR/dT) pour les trois types de résistance considérés en figure 2.

On constate que l'introduction du polymère dans l'ATO augmente sa résistivité et sa sensibilité en température. Avec 30 % en poids de solution polymère par rapport au poids total de la solution contenant le polymère et l'ATO, on atteint, à 20°C une résistance par carré de 100 kΩ/□ au lieu de 30 kΩ/□ sans polymère. Le coefficient de variation de résistance avec la température (TCR), égal à (1/R)x(dR/dT), augmente en valeur absolue (il est négatif dans le cas de l'encre NTC) ; cette augmentation est particulièrement significative dans la plage de 20 à 55°C.

La figure 4 représente une courbe d'évolution de la résistance en fonction de la température pour une pâte résistive PTC obtenue avec une proportion de 30 % en solution de polymère par rapport au poids total de la solution contenant le polymère et le noir de carbone. La courbe de la figure 4 a été obtenue pour une épaisseur de pâte résistive PTC de 5 µm. Les courbes correspondantes pour 0 et 10 % en poids de solution de polymère par rapport au poids total de la solution contenant le polymère et le noir de carbone ne sont pas illustrées. Elles ont la même allure mais les valeurs de résistances sont de plusieurs ordres de grandeur plus faibles. Par exemple pour le cas sans polymère, la résistance à 20°C est de 5.10⁴ Ω/□ au lieu de 1.10⁷ Ω/□ et la résistance à 80°C est de 3.10⁵ Ω/□ au lieu de 7.10⁷ Ω/□.

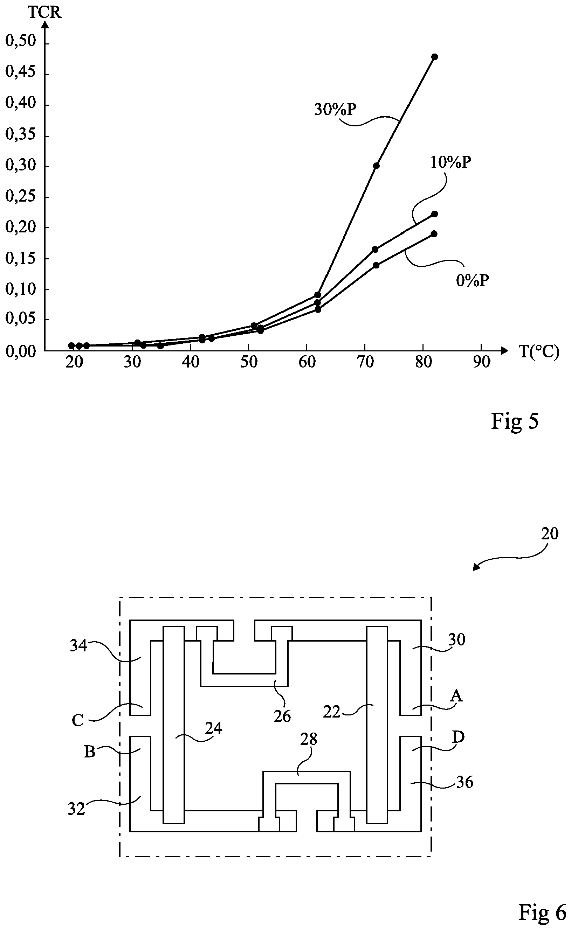

La figure 5 représente l'influence de l'ajout du polymère sur la sensibilité de la résistance PTC. On voit qu'à partir de 60°C, la sensibilité (TCR) de la résistance contenant 30 % de polymère est nettement supérieure à celle des résistances contenant 10 % de polymère ou pas de polymère.

Les encres décrites ici peuvent avantageusement être utilisées dans des capteurs de température à montage en pont de Wheatstone.

La figure 6 représente, de façon partielle et schématique, un exemple de résistances PTC et NTC disposées en pont de Wheatstone.

Le pont de Wheatstone 20 peut être réalisé en mettant en oeuvre le mode de réalisation de procédé de fabrication décrit précédemment en relation avec les figures 1A à 1D.

Le pont de Wheatstone 20 comprend deux bornes d'entrée A et B entre lesquelles est appliquée une tension d'alimentation Vᵢₙ et deux bornes de sortie C et D entre lesquelles est mesurée une tension V_{G}. Le pont de Wheatstone 20 comprend deux résistances PTC 22, 24 et deux résistances NTC 26, 28 et quatre pistes conductrices 30, 32, 34 et 36. Une extrémité de la résistance PTC 22 est reliée à la borne A par la piste conductrice 30 et l'autre extrémité de la résistance PTC 22 est reliée à la borne D par la piste conductrice 36. Une extrémité de la résistance PTC 24 est reliée à la borne B par la piste conductrice 32 et l'autre extrémité de la résistance PTC 24 est reliée à la borne C par la piste conductrice 34. Une extrémité de la résistance NTC 26 est reliée à la borne A par la piste conductrice 30 et l'autre extrémité de la résistance NTC 26 est reliée à la borne C par la piste conductrice 34. Une extrémité de la résistance NTC 28 est reliée à la borne B par la piste conductrice 32 et l'autre extrémité de la résistance NTC 28 est reliée à la borne D par la piste conductrice 36.

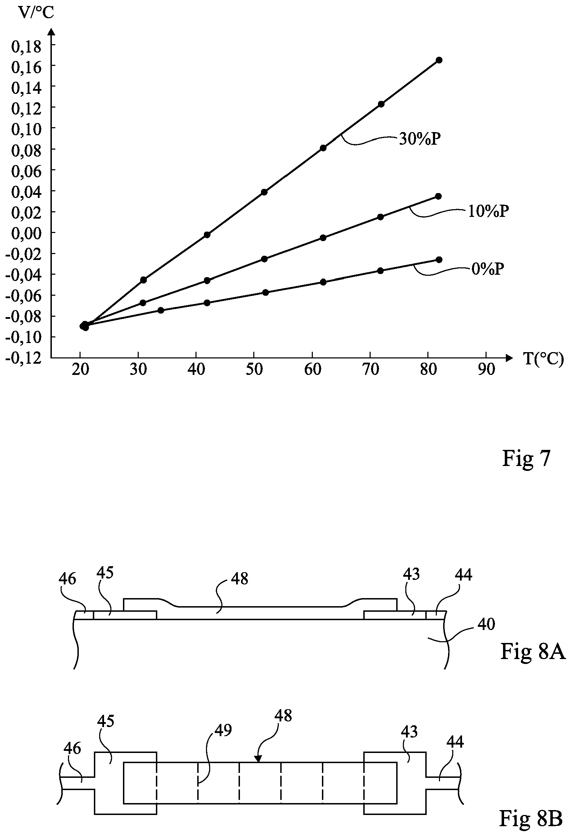

La figure 7 représente des courbes d'évolution de la caractéristique de sensibilité en V/°C de ponts de Wheatstone dans lesquels les résistances NTC et PTC ont été réalisées ou bien avec des encres classiques ou bien avec des encres enrichies de 10 ou 30 % en poids de solution de polymère telles que décrites ci-dessus. Les ponts de Wheatstone utilisés avaient la structure représentée en figure 6. Les résistances PTC 22, 24 avaient chacune une longueur de 3000 µm, une largeur de 800 µm et une épaisseur de 5 µm +/-1 µm. Les résistances NTC 26, 28 avaient chacune une longueur déployée de 2520 µm, une largeur de 500 µm et une épaisseur de 5 µm +/-1 µm.

L'effet du polymère est très important sur l'augmentation de la sensibilité. On peut atteindre des sensibilités de 100 mV/°C à 60°C pour un capteur de température alimenté à 4,8 V et avec 30 % en poids de la solution de polymère dans les deux encres résistives NTC et PTC, alors que avec 0 % de polymère la sensibilité est seulement de 30 mV/°C à 60°C.

Les figures 8A et 8B sont respectivement une vue en coupe et une vue de dessus schématique d'une résistance classique à pâte résistive. Cette résistance est formée sur un substrat 40 sur lequel on a déposé des plots conducteurs 43, 45 raccordés à des pistes conductrices respectives 44, 46. Une piste résistive 48 formée à partir d'une pâte résistive, couramment par sérigraphie, est formée entre les plots 43 et 45. On a représenté dans la vue de dessus de la figure 8B par des pointillés 49 une délimitation en carrés de la piste résistive 48 entre les plots 43 et 45. Dans l'exemple représenté, la piste comprend cinq carrés entre les plots 43 et 45. Une piste résistive en couche mince a une valeur de résistance proportionnelle au nombre de carrés qu'elle comprend, indépendamment de la dimension de ces carrés. Cette valeur de résistance dépend bien entendu aussi de la résistivité du matériau et de l'épaisseur de la couche résistive.

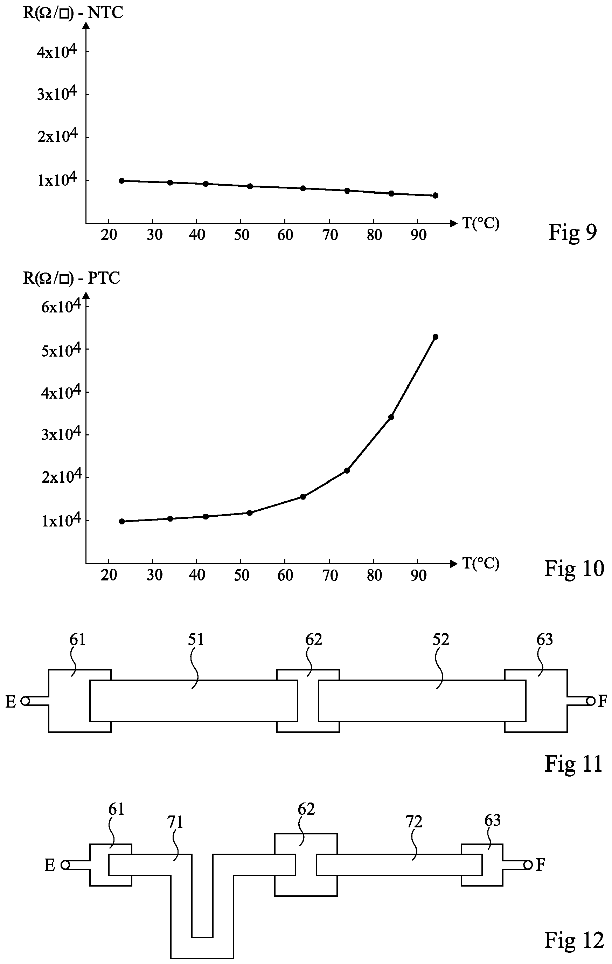

La figure 9 représente un exemple de courbe caractéristique de valeur de résistance par carré en fonction de la température d'une pâte résistive en un matériau à coefficient de température négatif, NTC. Cet exemple est donné dans le cas où le matériau NTC est à base de Sb₂O₅SnO₂ d'une épaisseur de 5 µm +/- 1 µm.

La figure 10 représente un exemple de courbe caractéristique de valeur de résistance par carré en fonction de la température d'une pâte résistive en un matériau à coefficient de température positif, PTC. Cet exemple est donné pour le cas où le matériau PTC est à base de noir de carbone d'une épaisseur de 8 µm +/- 1 µm.

On notera que les formes des courbes des figures 9 et 10 sont relativement figées pour un matériau donné. Si on augmente l'épaisseur des couches, ces courbes se déplacent sensiblement proportionnellement à elles-mêmes.

Un objet d'un mode de réalisation est de rendre ajustable la caractéristique de résistance en fonction de la température de résistances thermosensibles à pâte résistive.

Selon un mode de réalisation, le seuil de détection d'un capteur de température est ajusté afin de cibler une fourchette définie de détection. Selon un mode de réalisation, il est utilisé une pâte PTC qui a un seuil défini, par exemple un seuil à 35°C (c'est-à-dire sensiblement pas de variation de la valeur de la résistance avec la température en dessous de 35°C et ensuite une variation exponentielle au-dessus de ce seuil). Pour régler ce seuil, c'est-à-dire l'augmenter ou le diminuer, il est utilisé, en série avec la résistance PTC, une résistance NTC qui elle n'a pas de seuil mais une variation de la résistance sensiblement linéaire en température. En outre, un polymère adapté peut être ajouté dans chaque pâte résistive pour augmenter leur coefficient de variation de résistance avec la température (appelé en anglais TCR pour Temperature Coefficient of Résistance), c'est-à-dire pour augmenter leur sensibilité en température. Le fait de mettre les résistances PTC et NTC en série permet d'ajuster le seuil de détection de la pâte sensible PTC. L'ensemble des résistances PTC et NTC en série peut ensuite être intégré dans un circuit électrique de type pont de Wheatstone.

La figure 11 représente en vue de dessus un mode de réalisation d'une résistance mixte ajustable. Cette résistance comprend, en série entre deux bornes E et F une première piste résistive 51 et une deuxième piste résistive 52. Les deux pistes résistives sont constituées à base de pâtes résistives, déposées par exemple par sérigraphie. Les deux pistes résistives sont formées de matériaux ayant des coefficients de température de signes opposés. On considérera ci-après que la résistance 51 est du type à coefficient de température positif (PTC) et que la résistance 52 est du type à coefficient de température négatif (NTC). La mise en série des deux résistances est assurée du fait que la première piste résistive 51 s'étend entre un plot conducteur 61 relié à la borne E et un plot conducteur intermédiaire 62, et que la deuxième piste résistive 52 s'étend entre le plot intermédiaire 62 et un plot conducteur 63 relié à la borne F. Le fait que la première piste résistive 51 est en série avec la deuxième piste résistive 52 signifie qu'il n'y a pas d'autres composants électroniques connectés au plot intermédiaire 62.

La figure 12 est une vue d'un autre mode de réalisation d'une résistance mixte. De mêmes éléments qu'en figure 11 sont désignés par de mêmes références. La différence entre les deux figures est que la résistance 51 est remplacée par une résistance 71 ayant une forme à coudes multiples pour augmenter sa longueur. De plus, la résistance 52 est remplacée par une résistance 62 de même forme mais ne contenant pas le même nombre de carrés. Ceci ne constitue qu'un exemple des nombreuses topologies possibles pour les pistes résistives. En pratique, le concepteur choisira les formes des pistes résistives en fonction des contraintes topologiques qui lui sont imposées et du nombre de carrés que doit comprendre chaque piste résistive.

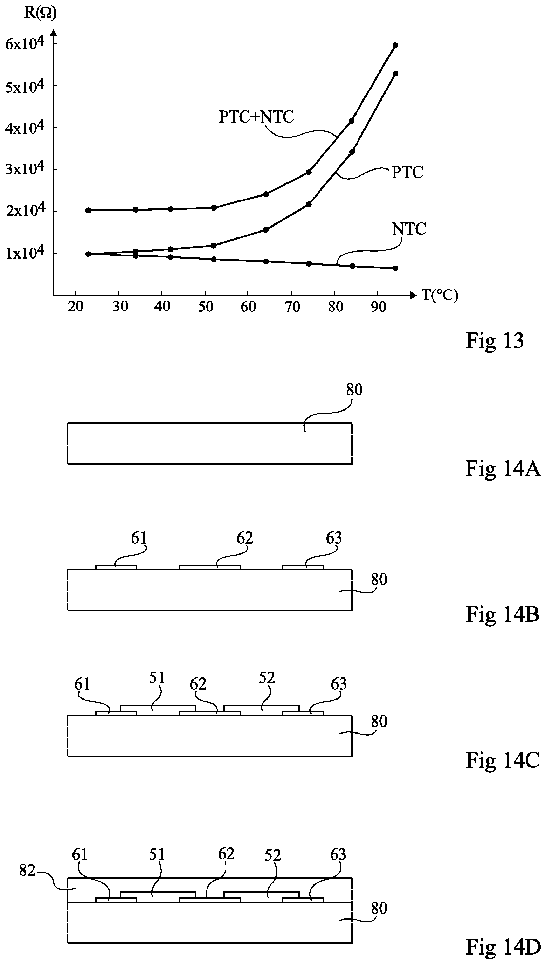

La figure 13 représente un exemple de courbes caractéristiques de valeurs de résistance en fonction de la température pour une résistance NTC, une résistance PTC et une résistance mixte (PTC+NTC). La résistance NTC présente en fonction de la température une pente négative sensiblement linéaire. La résistance PTC présente initialement une pente positive sensiblement linéaire entre environ 20 et environ 50°C, puis a l'allure d'une courbe exponentielle au-dessus d'une température de l'ordre de 50°C. Ainsi, en mettant en série une résistance PTC et une résistance NTC, on peut obtenir une résistance PTC dont la variation en fonction de la température est sensiblement nulle, entre 20 et 50°C, puis augmente exponentiellement au-delà d'un seuil. Ceci permet d'assurer des seuils de détection plus nets à des températures choisies. Les courbes de la figure 13 sont représentées dans le cas où l'on a mis en série des résistances PTC et NTC telles que décrites en relation avec les figures 9 et 10, chacune des résistances NTC et PTC ayant un nombre de carrés égal à 9. On comprendra que l'on réalisera divers ajustements en fonction du nombre de carrés choisis. On peut même obtenir une résistance mixte présentant une variation initiale de type négatif puis une variation nettement positive. Ceci permet d'obtenir des seuils encore plus nets. Ces ajustements peuvent être effectués en ajustant le nombre de carrés de chacune des résistances en série.

Pour obtenir des variations plus diverses des caractéristiques des résistances mixtes, on propose ici d'utiliser des résistances PTC et NTC modifiées par ajout d'une proportion choisie d'un polymère comme cela a été décrit précédemment. Plus particulièrement, on prévoit ici d'ajouter un polymère à une encre classique pour résistance NTC ou PTC, par exemple une encre à base de Sb₂O₅SnO₂ pour l'encre NTC et une encre à base de noir de carbone pour l'encre PTC. Comme cela a été décrit précédemment, le polymère a une constante diélectrique comprise entre 2 et 3, une masse molaire (caractérisant la longueur de chaine) comprise entre 50 000 et 150 000 g/mol, et une température de transition vitreuse Tg comprise entre 40 et 100°C. Ce polymère peut par exemple appartenir à la famille des polymères styrèniques ou à la famille des polymères fluorés.

Ainsi, en réalisant des résistances mixtes dans lesquelles l'une et/ou l'autre des résistances NTC et PTC est modifiée par ajout d'une plus ou moins grande quantité d'un polymère du type décrit ci-dessus, et en choisissant le nombre de carrés de chacune de ces résistances, on pourra façonner des résistances mixtes de caractéristiques souhaitées, notamment présentant une rupture de pente à des températures choisies.

Les figures 14A à 14D représentent les structures obtenues à des étapes d'un mode de réalisation d'un procédé de fabrication de résistances mixtes comprenant les étapes suivantes :
(1) On prépare un substrat 80 de PEN ou de PET (figure 14A). Les substrats PEN et PET sont cristallins et ont des températures de transition vitreuse respectives de 120 et 70°C. L'épaisseur du substrat 80 peut être de 50 à 200 µm, par exemple de 125 µm. Une faible épaisseur favorise la dynamique de transfert de la chaleur dans le capteur final.
(2) Des électrodes 61, 62, 63 formant les contacts électriques et les pistes électriques de la résistance mixte sont déposées et gravées (figure 14B). Ces électrodes 61, 62, 63 peuvent être en Au, Cu, Ag, Ti... et être déposées par dépôt physique en phase vapeur (PVD). Des électrodes en argent ou en cuivre (ou même en polymère conducteur comme du PEDOT : PSS (poly(3,4-éthylènedioxythiophène) : poly(styrène sulfonate)) peuvent être déposées par sérigraphie ou par jet d'encre.
(3) L'étape (2) est suivie directement d'un traitement sous plasma d'oxygène avec un débit de 50 sccm et une puissance de 80 W pendant 60 secondes pour éliminer les résidus sur la surface et améliorer l'adhésion des pâtes résistives sensibles à la température. Un traitement UV/O₃ (ultraviolet/ozone) pendant 3 à 5 minutes du substrat est également souhaitable.
(4) Des portions 51, 52 de pâtes résistives sensibles à la température NTC et PTC, éventuellement dopées en polymère, sont déposées (figure 14C). La portion de pâte résistive PTC 51 est formée après la portion de pâte résistive NTC 52 ou, inversement, la portion de pâte résistive NTC 52 est formée après la portion de pâte résistive PTC 51. La portion 51 est déposée au contact des plots conducteurs 61 et 62 et la portion 52 est déposée au contact des plots conducteurs 62 et 63. Chacun des dépôts peut être effectué par sérigraphie et être suivi d'un recuit à 130°C pendant 15 à 30 minutes (de préférence pendant 30 minutes). L'épaisseur des portions 51, 52 déposées peut être de 5 à 15 µm, par exemple 10 µm.
   Lorsqu'un ajout de polymère est prévu aux encres PTC et NTC, la température d'évaporation du solvant présent dans la solution d'encre ATO ou dans la solution de noir de carbone est, de préférence, supérieure à la température d'évaporation du solvant présent dans la solution du polymère utilisée pour fabriquer les encres NTC et PTC. De ce fait, le solvant présent dans la solution du polymère s'évapore avant le solvant présent dans la solution d'encre ATO ou dans la solution de noir de carbone. La solution d'encre ATO ou de noir de carbone se répand alors dans les logements du réseau de polymère libérés par l'évaporation du solvant de la solution de polymère. On évite ainsi la formation d'une porosité trop importante des portions 51, 52 après évaporation de la totalité des solvants.
(5) Une couche de passivation 82 est déposée (figure 14D). La couche 82 peut être une couche de passivation hydrophobe à base d'un polymère fluoré à faible constante diélectrique, de l'ordre de 2. A titre d'exemple, ce dépôt est fait par sérigraphie ou par pulvérisation ou même par jet d'encre et est suivi d'un recuit à 100°C pendant 20 à 30 minutes. L'étape (5) peut ne pas être présente.

Selon un exemple de réalisation, les résistances à base de pâtes thermosensibles sont déposées sur des substrats flexibles de type PEN (polyéthylène naphtalate) ou PET (polyéthylène téréphtalate). Toutefois, ce qui précède s'applique également au cas où le substrat est un substrat rigide, par exemple un substrat de verre.

## Revendications

1. Résistance thermosensible à coefficient de température négatif ou positif, comprenant respectivement un élément résistif à base d'oxyde d'étain dopé à l'antimoine ou un élément résistif à base de noir de carbone, **caractérisé en ce que** cette résistance contient un polymère de constante diélectrique comprise entre 2 et 3, de masse molaire comprise entre 50000 et 150000 g/mol, et de température de transition vitreuse Tg comprise entre 40 et 100°C.

2. Résistance thermosensible selon la revendication 1, dans laquelle le polymère appartient à la famille des polymères styréniques ou à la famille des polymères fluorés.

3. Résistance thermosensible selon la revendication 1 ou 2, dans laquelle l'élément résistif comprend de 5 % à 40 % en poids d'extrait sec du polymère par rapport au poids total de l'élément résistif.

4. Résistance thermosensible selon l'une quelconque des revendications 1 à 3, à coefficient de température positif à seuil de température ajustable dont la résistance est constante au-dessous dudit seuil et croît avec la température au-dessus dudit seuil, comprenant, en série, une première piste résistive (51 ; 71) constituée d'une pâte thermosensible à coefficient de température positif, PTC, et une deuxième piste résistive (52 ; 62) constituée d'une pâte thermosensible à coefficient de température négatif, NTC.

5. Procédé de fabrication d'une résistance thermosensible à coefficient de température négatif ou positif, comprenant les étapes suivantes :
réaliser une première solution comprenant de l'oxyde d'étain dopé à l'antimoine ou du noir de carbone contenant un polymère de constante diélectrique comprise entre 2 et 3, de masse molaire comprise entre 50000 et 150000 g/mol, et de température de transition vitreuse Tg comprise entre 40 et 100°C ;
former des portions (14, 16) de la première solution sur un support (10) ; et
chauffer les portions.

6. Procédé selon la revendication 5, dans lequel l'étape de fabrication de la première solution comprend les étapes suivantes :
prévoir une deuxième solution comprenant de l'oxyde d'étain dopé à l'antimoine ou du noir de carbone et un premier solvant ;
prévoir une troisième solution comprenant le polymère et un deuxième solvant ; et
mélanger les deuxième et troisième solutions.

7. Procédé selon la revendication 6, dans lequel la troisième solution est dans une proportion en poids inférieure à 30 %, de préférence de 10 à 30 % par rapport au poids total de la première solution.

8. Procédé selon la revendication 6 ou 7, dans lequel la troisième solution comprend de 15 à 30 % en poids, par exemple 25 %, du polymère dans 85 à 70 % en poids, par exemple 75 %, du deuxième solvant.

9. Procédé selon l'une quelconque des revendications 6 à 8, dans lequel le premier solvant est choisi dans le groupe comprenant le cyclopentanone, l'acétate d'éthyle, le tétrahydrofurane, l'acétone, la 3-hexanone et la 2-pentanone pour l'oxyde d'étain dopé à l'antimoine ou le groupe comprenant le cyclopentanone, le dibutyl carbitol, et l'éthylène glycol diacétate pour le noir de carbone.

10. Procédé selon l'une quelconque des revendications 6 à 9, dans lequel le deuxième solvant a une température d'évaporation comprise entre 100 et 170°C.

11. Procédé selon l'une quelconque des revendications 6 à 10, dans lequel le polymère appartient à la famille des polymères styréniques ou à la famille des polymères fluorés.

12. Procédé selon la revendication 11, dans lequel le deuxième solvant est choisi dans le groupe comprenant le toluène ou le butyl acétate pour les polymères styréniques ou le perfluorotributylamine (FC43) pour les polymères fluorés.

13. Procédé selon l'une quelconque des revendications 6 à 12, dans lequel la température d'évaporation du premier solvant est strictement supérieure à la température d'évaporation du deuxième solvant.

14. Procédé selon l'une quelconque des revendications 5 à 13 de fabrication d'une résistance thermosensible à coefficient de température positif à seuil de température ajustable dont la résistance est constante au-dessous dudit seuil et croît avec la température au-dessus dudit seuil, comprenant les étapes suivantes :
former en série sur le support (80) une première portion (51 ; 71) constituée d'une pâte thermosensible à coefficient de température positif, PTC, et une deuxième portion (52 ; 62) constituée d'une pâte thermosensible à coefficient de température négatif, NTC, la première et/ou la deuxième portion (51, 52) étant formée avec la première solution ; et
chauffer les première et deuxième portions pour former des première et deuxième pistes résistives (51, 52 ; 71, 72).

## Patentansprüche

1. Wärmeempfindlicher Widerstand mit einem negativen bzw. positiven Temperaturkoeffizienten, der ein Widerstandselement basierend auf Antimon-Zinn-Oxid oder ein Widerstandselement basierend auf Carbon Black aufweist, **dadurch gekennzeichnet, dass** der Widerstand ein Polymer mit einer dielektrischen Konstante zwischen 2 und 3, eine molare Masse zwischen 50,000 und 150,000 g/mol und eine Glasübergangstemperatur Tg zwischen 40 und 100°C aufweist.

2. Wärmeempfindlicher Widerstand gemäß Anspruch 1, wobei das Polymer zur Familie der Styrol-Polymere oder zur Familie der fluorierten Polymere gehört.

3. Wärmeempfindlicher Widerstand gemäß Anspruch 1 oder 2, wobei das Widerstandselement 5% bis 40% der Masse des Trockenextrakts des Polymers in Bezug zu der Gesamtmasse des Widerstandselements aufweist.

4. Wärmeempfindlicher Widerstand gemäß einem der Ansprüche 1 bis 3, mit positivem Temperaturkoeffizienten, der eine einstellbare Grenzwerttemperatur besitzt und mit einem Widerstand, der unter dem Grenzwert konstant ist und der über dem Grenzwert mit der Temperatur ansteigt, der in Reihe folgendes aufweist: eine erste Widerstandsspur (51; 71), die aus einer wärmeempfindlichen Paste mit einem positiven Temperaturkoeffizienten, PTC, aufgebaut ist, und eine zweite Widerstandsspur (52; 62), die aus einer wärmeempfindlichen Paste mit einem negativen Temperaturkoeffizienten, NTC, aufgebaut ist.

5. Verfahren zum Herstellen eines wärmeempfindlichen Widerstands mit einem negativen oder positiven Temperaturkoeffizienten, das folgende Schritte aufweist:
Bilden einer ersten Lösung, die Antimon-Zinn-Oxid oder Carbon Black aufweist und ein Polymer mit einer dielektrischen Konstante zwischen 2 und 3, einer molaren Masse zwischen 50,000 und 150,000 g/mol und einer Glasübergangstemperatur Tg zwischen 40 und 100°C;
Bilden von Teilen (14, 16) der ersten Lösung auf einem Träger (10); und
Erhitzen der Teile.

6. Verfahren gemäß Anspruch 5, wobei der Schritt der Herstellung der ersten Lösung folgende Schritte aufweist:
Bereitstellen einer zweiten Lösung, die Antimon-Zinn-Oxid oder Carbon Black und ein erstes Lösungsmittel aufweist;
Bereitstellen einer dritten Lösung, die das Polymer und ein zweites Lösungsmittel aufweist; und
Vermischen der zweiten und dritten Lösung.

7. Verfahren gemäß Anspruch 6, wobei die dritte Lösung mit einen Massenanteil von weniger als 30%, vorzugsweise von 10 bis 30% in Bezug auf die Gesamtmasse der ersten Lösung vorhanden ist..

8. Verfahren gemäß Anspruch 6 oder 7, wobei die dritte Lösung von 15 bis 30 Massen-%, beispielsweise 25%, Polymer enthält, und zwar in 85 bis 70 Massen-%, beispielsweise 75% des zweiten Lösungsmittels.

9. Verfahren gemäß einem der Ansprüche 6 bis 8, wobei das erste Lösungsmittel aus einer Gruppe ausgewählt ist, die Cyclopentanon, Ethylacetat, Tetrahydrofuran, Aceton, 3-Hexanon und 2-Pentanon für Antimon-Zinn-Oxid aufweist, oder aus einer Gruppe, die Cyclopentanon, Dibutylcarbitol und Ethylenglykoldiacetat für Carbon Black aufweist.

10. Verfahren gemäß einem der Ansprüche 6 bis 9, wobei das zweite Lösungsmittel eine Verdunstungstemperatur im Bereich von 100 bis 170°C besitzt.

11. Verfahren gemäß einem der Ansprüche 6 bis 10, wobei das Polymer zu der Familie der Styrol-Polymere oder der Familie der fluorierten Polymere gehört.

12. Verfahren gemäß Anspruch 11, wobei das zweite Lösungsmittel aus der Gruppe gewählt ist, die Toluol oder Butylacetat für Styrol-Polymere oder Perfluortributylamin (FC43) für fluorierte Polymere aufweist.

13. Verfahren gemäß einem der Ansprüche 6 bis 12, wobei die Verdunstungstemperatur des ersten Lösungsmittels größer ist als die Verdunstungstemperatur des zweiten Lösungsmittels.

14. Verfahren gemäß einem der Ansprüche 5 bis 13 des Herstellens eines wärmeempfindlichen Widerstands mit einem positiven Temperaturkoeffizienten, der eine einstellbare Grenzwerttemperatur besitzt und mit einem Widerstand, der unter dem Grenzwert konstant ist und der über dem Grenzwert mit der Temperatur ansteigt, das folgende Schritte aufweist:
Bilden in Reihe auf dem Träger (80) eines ersten Teils (51; 71), das aus einer wärmeempfindlichen Paste mit einem positiven Temperaturkoeffizienten, PTC, aufgebaut ist, und eines zweiten Teils (52; 62), das aus einer wärmeempfindlichen Paste mit einem negativen Temperaturkoeffizienten, NTC, aufgebaut ist, wobei das erste und/oder zweite Teil (51, 52) mit der ersten Lösung gebildet wird; und
Erhitzen der ersten und zweiten Teile, um erste und zweite Widerstandsspuren (51, 52; 71, 72) zu bilden.

## Claims

1. A heat-sensitive resistor of negative or positive temperature coefficient, respectively comprising a resistive element based on antimony tin oxide or a resistive element based on carbon black, **characterized in that** the resistor contains a polymer having a dielectric constant between 2 and 3, a molar mass between 50,000 and 150,000 g/mol, and a glass transition temperature Tg between 40 and 100°C.

2. The heat-sensitive resistor of claim 1, wherein the polymer belongs to the family of styrenic polymers or to the family of fluorinated polymers.

3. The heat-sensitive resistor of claim 1 or 2, wherein the resistive element comprises from 5% to 40% by mass of dry extract of the polymer with respect to the total mass of the resistive element.

4. The heat-sensitive resistor of any of claims 1 to 3, of positive temperature coefficient having an adjustable threshold temperature with a resistance which is constant below said threshold and which increases along with temperature above said threshold comprising, in series, a first resistive track (51; 71) made of a heat-sensitive paste of positive temperature coefficient, PTC, and a second resistive track (52; 62) made of a heat-sensitive paste of negative temperature coefficient, NTC.

5. A method of manufacturing a heat-sensitive resistor of negative or positive temperature coefficient, comprising the steps of:
forming a first solution comprising antimony tin oxide or carbon black containing a polymer having a dielectric constant between 2 and 3, a molar mass between 50,000 and 150,000 g/mol, and a glass transition temperature Tg between 40 and 100°C;
forming portions (14, 16) of the first solution on a support (10); and
heating the portions.

6. The method of claim 5, wherein the step of manufacturing the first solution comprises the steps of:
providing a second solution comprising antimony tin oxide or carbon black and a first solvent;
providing a third solution comprising the polymer and a second solvent; and
mixing the second and third solutions.

7. The method of claim 6, wherein the third solution is by a mass proportion smaller than 30%, preferably from 10 to 30% with respect to the total mass of the first solution.

8. The method of claim 6 or 7, the third solution comprises from 15 to 30% by mass, for example, 25%, of the polymer in from 85 to 70% by mass, for example, 75%, of the second solvent.

9. The method of any of claims 6 to 8, wherein the first solvent is selected from the group comprising cyclopentanone, ethyl acetate, tetrahydrofuran, acetone, 3-hexanone, and 2-pentanone for antimony tin oxide or the group comprising cyclopentanone, dibutyl carbitol, and ethylene glycol diacetate for carbon black.

10. The method of any of claims 6 to 9, wherein the second solvent has an evaporation temperature in the range from 100 to 170°C.

11. The method of any of claims 6 to 10, wherein the polymer belongs to the family of styrenic polymers or to the family of fluorinated polymers.

12. The method of claim 11, wherein the second solvent is selected from the group comprising toluene or butyl acetate for styrenic polymers or perfluorotributylamine (FC43) for fluorinated polymers.

13. The method of any of claims 6 to 12, wherein the evaporation temperature of the first solvent is greater than the evaporation temperature of the second solvent.

14. The method of any of claims 5 to 13 of manufacturing a heat-sensitive resistor of positive temperature coefficient having an adjustable temperature threshold with a resistance which is constant below said threshold and which increases along with temperature above said threshold, comprising the steps of:
forming in series on the support (80) a first portion (51; 71) made of a heat-sensitive paste of positive temperature coefficient, PTC, and a second portion (52; 62) made of a heat-sensitive paste of negative temperature coefficient, NTC, the first and/or the second portion (51, 52) being formed with the first solution; and
heating the first and second portions to form first and second resistive tracks (51, 52; 71, 72).
